# Europäisches Patentamt
# European Patent Office
# Office européen des brevets

(11) Numéro de publication: **0 175 337**
**B1**

(12)

# FASCICULE DE BREVET EUROPÉEN

(45) Date de publication du fascicule du brevet:
**04.01.89**

(51) Int. Cl.⁴: **G 01 L 5/00**

(21) Numéro de dépôt: **85111725.9**

(22) Date de dépôt: **17.09.85**

(54) **Dispositif de mesure de la force appliquée tangentiellement à un rotor muni de dents.**

(30) Priorité: **19.09.84 FR 8414389**

(43) Date de publication de la demande:
**26.03.86 Bulletin 86/13**

(45) Mention de la délivrance du brevet:
**04.01.89 Bulletin 89/1**

(84) Etats contractants désignés:
**AT BE CH DE FR GB IT LI LU NL SE**

(56) Documents cité:
**FR-A-2 329 846**

(73) Titulaire: **ALSTHOM, 38, avenue Kléber, F-75784 Paris Cédex 16 (FR)**

(72) Inventeur: **Bigret, Roland, 22, rue Jean Varnet, F-93700 Drancy (FR)**

(74) Mandataire: **Weinmiller, Jürgen, Lennéstrasse 9 Postfach 24, D-8133 Feldafing (DE)**

LIBER, STOCKHOLM 1989

## Description

La présente invention a trait à un dispositif de mesure de la force appliquée tangentiellement à un rotor muni de dents - revendication 1.

Il est connu pour déterminer les caractéristiques dynamiques d'un rotor en torsion d'étudier les vibrations du rotor résultant de l'application d'une force d'excitation tangentielle au rotor.

Dès que le coup est appliqué, le dispositif est enlevé ce qui évite tout danger puisqu'il n'est pas entrainé en rotation par le rotor.

Le dispositif selon l'invention particulièrement intéressant lorsque le rotor est muni de dents entrainées en rotation par un système à cliquets est caractérisé en ce qu'il comporte une panne pouvant prendre appui sous une dent du rotor, un guide-cliquet servant à guider le cliquet, un capteur de force disposé entre la panne et le guide-cliquet, ladite panne étant munie d'un manche permettant à un manipulateur d'enlever le dispositif après que le cliquet ait frappé le coup.

Selon une réalisation préférentielle de l'invention la panne comporte sur la face au contact des dents un bourrelet venant se loger sous une dent suivie d'un creux épousant la forme de la dent suivante.

Un rotor muni de dents entrainé par un système à cliquets est décrit par exemple dans le document FR-A-2 329 846.

L'invention va maintenant être décrite plus en détail en se référant à un mode de réalisation particulier cité à titre d'exemple non limitatif et représenté par des dessins annexés.

La figure 1 représente un dispositif selon l'invention.

La figure 2 représente le dispositif de la figure 1 monté sur la roue dentée d'un rotor.

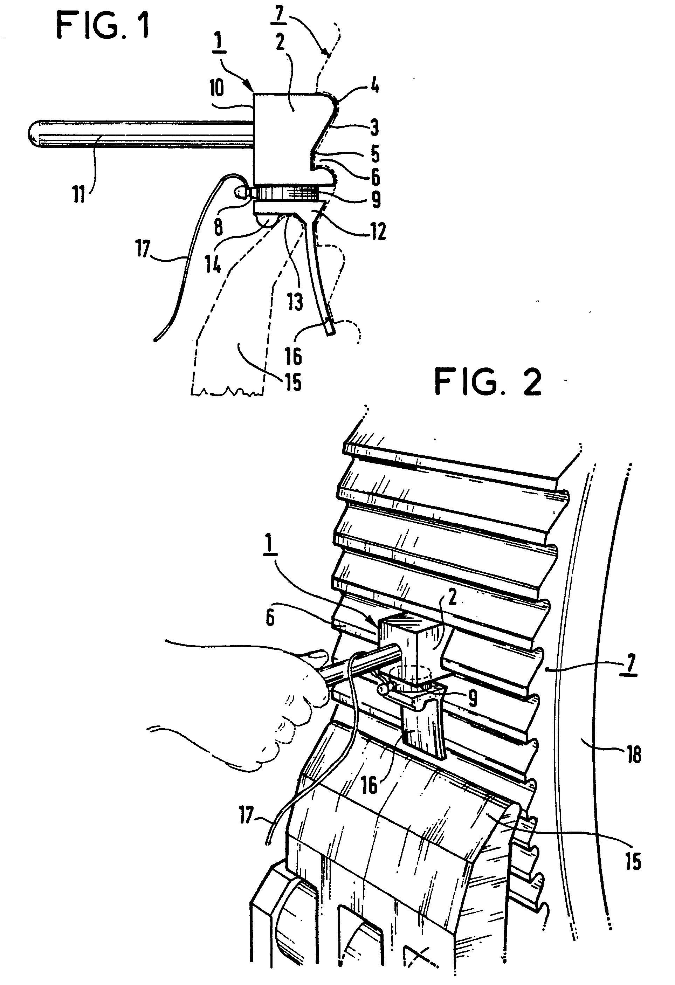

Le dispositif de mesure 1 représenté à la figure 1 comporte une panne 2 ayant une forme de cube comportant sur sa face avant 3 un bourrelet 4 suivi d'un creux 5 dans lequel peut venir se loger une dent 6 d'une roue dentée 7 sur la face du bas 8 un capteur de force 9 et sur la face arrière 10 opposée à la face avant 3 un manche 11.

Le capteur de force 9 est muni à sa partie basse d'un guide-cliquet 12 comportant un talon 13 muni à sa partie arrière d'un bourrelet 14 destiné à bloquer le cliquet 15 et à sa partie avant d'un tablier 16 venant recouvrir les deux dents qui suivent la dent se logeant dans le creux 5 de la face avant 3 de la panne 2 (voir figure 2).

Le capteur de force 9 est constitué par une cellule piézoélectrique (ou par tout autre dispositif susceptible de mesurer des forces) munie d'un fil électrique de sortie 17 fournissant un signal représentatif de la force appliquée sur le talon 13.

Le cliquet 15 et la roue dentée 7 comportant les dents constitue un dispositif de virage destiné à entraîner en rotation le rotor 18 lorsque la turbine n'est pas en fonctionnement. Pour entraîner le rotor 18 en rotation le cliquet 15 est animé d'un mouvement alternatif comme décrit par exemple dans le document FR-A-2 329 846.

Le cliquet s'engrène dans la roue dentée 7. Il rentre entre deux dents 6, pousse la roue dentée 7, revient en arrière puis rentre entre deux autres dents 6, la dent postérieure d'une poussée devient la dent antérieure de la poussée suivante.

Pour faire fonctionner le dispositif selon l'invention il suffit de placer en tenant le manche 11, la panne 2 sur la roue dentée 7 avec le guide-cliquet 12 à cheval sur les deux dents entre lesquelles le cliquet 15 aurait pris appui le coup suivant.

L'extrémité du cliquet 15 glisse sur le guide-cliquet 12 et vient frapper sur le talon 13 donnant une impulsion à la roue dentée 7 qui est mesurée instantanément par la cellule 9.

Une fois le coup donné l'opérateur retire le dispositif 1, ce qui évite tout danger de heurt des structures environnantes par un dispositif entrainé en rotation par le rotor 18.

## Revendications

1. Dispositif de mesurre de la force appliquée tangentiellement à un rotor (18) muni de dents (6), qui comporte une panne (2) pouvant prendre appui sous une dent (6) du rotor (18), un talon (13) servant à recevoir l'élément appliquant la force, un capteur de force (9) disposé entre la panne (2) et le talon (13), ladite panne (2) étant munie d'un manche (11) permettant à un manipulateur d'enlever le dispositif (1) après que le coup ait été frappe.

2. Dispositif selon la revendication 1, caractérisé en ce que la force est appliquée au rotor (18) par un système à cliquets (15), un guide-cliquet (12) sert à recevoir le coup du cliquet (15) et empêche le cliquet (15) de s'engrener dans les dents (6), le capteur de force (9) est disposé entre la panne (2) et le guide-cliquet (12).

3. Dispositif selon la revendication 2, caractérisé en ce que la panne (2) comporte sur la face (3) au contact des dents (6) un bourrelet venant se loger sous une dent (6) suivie d'un creux (5) épousant la forme de la dent suivante (6).

## Patentansprüche

1. Vorrichtung zum Messen der Kraft, die auf einen mit Zähnen (6) versehenen Rotor (18) tangential ausgeübt wird, mit einer Klaue (2), die sich unter einem Zahn (6) des Rotors (18) abstützen kann, einem Absatz (13), der das den Stoß ausführende Element empfängt, einem Kraftmesser (9), der zwischen der Klaue (2) und dem Absatz (13) angeordnet ist, wobei die Klaue (2) mit einem Griff (11) versehen ist, der einer Bedienungsperson gestattet, die Vorrichtung (1) wegzunehmen, nachdem der Stoß ausgeführt worden ist.

2. Vorrichtung nach Anspruch 1, dadurch gekennzeichnet, daß die Kraft auf den Rotor (18) durch ein Klinkensystem (15) ausgeübt wird, ein Klinkenführungsglied (12) dazu dient, den Stoß der Klinke (15) aufzunehmen und die Klinke (15) daran zu hindern, zwischen die Zähne zu greifen, und der Kraftmesser (9) zwischen der Klaue (2) und der Klinkenführungsglied (12) angeordnet ist.

3. Vorrichtung nach Anspruch 2, dadurch gekennzeichnet, daß die Klaue (2) an der Seite (3) in Kontakt mit den Zähnen (6) einen Wulst aufweist, der sich unter einen Zahn (6) setzt und auf den eine Ausnehmung (5) von der Form des nächsten Zahnes (6) folgt.

## Claims

1. A device for measuring the force applied tangentially to a rotor (18) equipped with teeth (6), comprising a claw (2) adapted to bear under a tooth (6) of the rotor (18), a heel (13) for receiving the element which applies the force, a force sensor (9) disposed between the claw (2) and the heel (13), said claw (2) presenting a handle (11) enabling an operator to remove the device (1) once the stroke has been effected.

2. A device according to claim 1, characterized in that the force is applied to the rotor (18) by a ratchet mechanism (15), a pawl guide (12) receives the stroke of the pawl (15) and prevents the pawl (15) from meshing with the teeth (6), and a force sensor (9) is disposed between the claw (2) and the pawl guide (12).

3. A device according to claim 2, characterized in that the claw (2) has on its front face (3) in contact with the teeth (6), a nose adapted to be engaged under a tooth (6), followed by a recess (5) mating the shape of the following tooth (6).

# FIG. 1

# FIG. 2